(19)

Europäisches
Patentamt
European
Patent Office
Office européen
des brevets

(11) **EP 3 639 674 A1**

(12) **EUROPEAN PATENT APPLICATION**

(43) Date of publication:
**22.04.2020 Bulletin 2020/17**

(51) Int Cl.:
**A23K 10/00** (2016.01)   **A23K 20/147** (2016.01)
**A23K 50/40** (2016.01)

(21) Application number: **18201322.7**

(22) Date of filing: **18.10.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Mars, Incorporated
McLean, VA 22101 (US)**

(72) Inventors:
• **GARZINO, Bénédicte
  30600 VAUVERT (FR)**
• **HOURS, Marie-Anne
  30250 AUBAIS (FR)**
• **CHARLES, Hélène
  34590 MARSILLARGUES (FR)**
• **FILIPPINI, Matthieu
  30114 NAGES et SOLORGUES (FR)**

(74) Representative: **Nony
  11 rue Saint-Georges
  75009 Paris (FR)**

(54) **PET FOOD COMPOSITIONS FOR WEIGHT MANAGEMENT IN PETS WITH ADVERSE FOOD REACTION**

(57)   The invention relates to a hypoallergenic palatable composition for use in achieving weight management for a pet animal affected with adverse food reaction characterized in that it comprises:

- an amount of at least 25% of at least partially hydrolysed proteins;
- an amount of at least 10% of crude fibers,
based on the total weight of dry matter of the composition.

EP 3 639 674 A1

**Description**

**FIELD OF THE INVENTION**

The present invention relates to the field of pet food compositions intended to achieve weight loss and/or weight management in pets affected with adverse food reactions (AFR), in particular with cutaneous adverse food reactions (CAFR).

Specifically, the food compositions are based on a high hydrolysed proteins content, a low fat content and a high dietary fibers content, in particular a high crude fibers content.

**BACKGROUND OF THE INVENTION**

Obesity is now recognized as the most prevalent medical disease in pets worldwide, and may significantly decrease the overall longevity. Prevalence of overweight and obesity in various populations of dogs reportedly range up to 59% (Courcier et al., 2010; APOP 2016).

Interestingly, Courcier et al. have observed that the environmental risk factors associated with obesity in dogs are multifactorial and include owner's personal income, owner's age, frequency of snacks/treats and amount of exercise the dog receives.

Drug-based strategies, involving either dirlotapide or mitratapide, have provided encouraging results in weight loss, but were poorly accepted in clinical practice, and hence were withdrawn from the market (see German, 2016).

Alternative strategies for weight management, including weight loss program, were developed involving dietary energy restriction and the use of a purpose-formulated diet. A low calorie, high protein and high fiber diet has been shown to be an efficacious strategy to promote weight loss while preserving lean body mass (Weber et al., 2007; German et al., 2010).

However, current commercial diets for weight loss contain intact protein sources which may cause allergic flares in allergic pets.

In particular, high protein diet may provoke adverse food reactions (AFR), in particular, cutaneous AFR (CAFR).

CAFR is a non-seasonal pruritic dermatitis caused by an ingested allergen, which are essentially proteins and/or glycoproteins of a molecular weight from 10 kDa to 70 kDa (Hefle et al., 1996). This condition is commonly observed in dogs, reported to account for up to 40% of dogs presented with pruritus (Olivry and Mueller, 2016). Hydrolyzed protein-based diets are one of the recognized strategies for the diagnosis and management of dogs with CAFR (Verlinden et al., 2006). However, hydrolyzed proteins are not known to be very palatable. In addition, Hand et al. (Small animal clinical nutrition; 5th Edition) reported that, for dog pets with CAFR, the excess of dietary proteins should be avoided, i.e. that the dietary proteins should not exceed 16% to 22% by weight, based on the total weight of dry matter of the food product.

Nevertheless, diet compositions generally have moderate protein contents, which is not in favor of maintaining lean body mass during weight loss and providing adequate essential amino acids intake when the daily ration is restricted.

Hence, it rapidly emerges that the current strategies to manage concomitantly weight loss and CAFR are conflicting with respect to the proteins and fats contents, since managing CAFR would involve moderate level of proteins and moderate level of fats, whereas managing weight loss would require high level of proteins and low level of fats.

Consequently, because CAFR and obesity both have a high prevalence in pets, such as in dogs and in cats, there is a need to provide a food composition formulated to manage both conditions, i.e. achieve weight loss and/or maintenance of lean body mass in pets with concurrent CAFR.

In addition, this food composition should be palatable, well tolerated by the pet and be easily produced.

**SUMMARY OF THE INVENTION**

A first aspect of the instant invention relates to a hypoallergenic palatable composition for use in achieving weight management for a pet animal affected with adverse food reaction characterized in that it comprises:

- an amount of at least 25% by weight of at least partially hydrolysed proteins; and
- an amount of at least 10% by weight of crude fibers, based on the total weight of dry matter of the composition.

In another aspect, the instant invention further relates to a hypoallergenic palatable composition comprising, by weight based on the total weight of the composition:

- an amount ranging from about 20% to about 38% of at least partially hydrolysed proteins;
- an amount ranging from about 8% to about 23% of crude fibers;
- an amount ranging from about 4% to about 13% of crude fat;

- an amount ranging from about 4% to about 12% of moisture.

Another aspect of the instant invention further relates to a method for achieving weight management in a pet animal affected with adverse food reaction characterized in that it comprises at least a step of feeding the pet animal with a hypoallergenic palatable composition as defined in the present disclosure.

## DETAILED DESCRIPTION OF THE INVENTION

The objective of the inventors was to provide a well-tolerated new diet food composition, including low fat, high hydrolyzed protein and high fiber contents, in dogs with CAFR fed at maintenance energy requirements.

As it will emerge from the examples below, the inventors surprisingly observed that a high protein, high fiber diet and low fat diet, may ameliorate the skin condition associated with pets having CAFR, while maintaining a weight management control.

Indeed, despite being preferably rich in hydrolyzed proteins, which are known to decrease palatability, the food composition according to the instant invention has good acceptance.

### • Hypoallergenic palatable composition and uses thereof

A first aspect of the instant invention relates to a hypoallergenic palatable composition for use in achieving weight management for a pet animal affected with adverse food reaction characterized in that it comprises:

- an amount of at least 25% by weight of at least partially hydrolysed proteins; and
- an amount of at least 10% by weight of crude fibers, based on the total weight of dry matter of the composition.

As used herein, the expressions "composition", "food composition" and "pet food composition" may be used indifferently to refer to the same subject matter.

Within the scope of the instant invention, "hypoallergenic composition" is intended to mean a composition for which a substantially limited or no allergic reaction is achieved upon consumption of the composition.

As used herein, the expression "palatable composition" refers to a composition that is visually appealing (i.e. form and colour) and tasty (i.e. smell and taste) for a pet animal.

The palatability of the hypoallergenic palatable compositions according to the instant invention may be measured by any suitable known method in the art.

Illustratively, the palatability may be measured by one or more methods including the first choice method, the intake ratio method, the consumption ratio method, the preference method, the first approach method.

Illustratively, the first choice (FC) method measures which ration from a panel of rations first attracts the pet to eat; the intake ratio (IR) measures the amount of one ration among several rations consumed divided by the total consumption; the consumption ratio (CR) compares the consumption of one ration in terms of the other rations; the preference method provides insight into significant preferences by individual animals in a group of pet taste testers; the first approach method measures which ration the pet first approaches, irrespective of whether the pet consumed any of the ration.

Illustratively, a composition according to the instant invention may achieve a palatability ratio as compared to a reference composition (VET DIET SATIETY SUPPORT DOG DRY; ROYAL CANIN®) of 84:16, as measured in a preference method assay.

Within the scope of the instant invention, "weight management" is intended to refer to maintaining an average weight or alternatively reducing an average weight, i.e. weight loss.

As used herein, the expression "adverse food reaction" is referring to an abnormal or exaggerated clinical response to the ingestion of a food or food additive. It may be immune mediated (called food allergy or hypersensitivity) or not immune mediated (called food intolerance).

Illustratively, adverse food reaction in dogs and cats mainly encompasses puritus, often referred as to itching. In dogs, adverse food reaction may result in additional dermatological signs, such as seborrhoea, pyoderma or Malassezia. In cats, the additional dermatological signs may be the presence of eosinophilic plaque, miliary dermatitis or alopecia.

Within the scope of the instant invention, the expression "dry matter (DM) basis" is intended to refer to a mean for relating to the amount of an ingredient in a composition, in particular a food composition, the said amount being expressed upon the removal of the moisture content of the food composition. At the opposite, the expression "as fed" is intended to refer a to a mean for relating to the amount of an ingredient in the food composition, said amount being expressed in the state it is consumed, which includes moisture.

With the scope of the instant invention, dry matter represents the matter upon elimination of the moisture, e.g.

by evaporation or by heating.

Unless disclosed otherwise, the percentage of ingredients comprised in the dry food composition consists of a percentage by weight based on the total weight of the dry matter of the said food composition.

As used herein, the term "about" is intended to refer to an amount or a value plus or minus 10% of the said amount or value.

The protein content of the composition according to the instant invention shall be high so as to ensure maintenance of lean body mass. In addition, proteins with a high degree of hydrolysis allow reducing the risk of AFR, in particular CAFR.

A food composition according to the present invention may contain one or more distinct source(s) of proteins. Generally, a pet food composition as described herein comprises a plurality of sources of proteins.

In some embodiments, a hypoallergenic palatable composition according to the instant invention comprises an amount ranging from about 25% by weight to about 40% by weight protein on a dry matter basis, which protein consists of at least partially hydrolysed proteins.

As used herein, a protein content ranging from about 25% to about 40% by weight includes a protein content of 26%, 27%, 28%, 29%, 30%, 31%, 32%, 33%, 34%, 35%, 36%, 37%, 38%, 39% by weight, based on the total weight of dry matter of the composition.

In some embodiments, the at least partially hydrolysed proteins consist of 95% of proteins hydrolysed.

The expression "95% of proteins hydrolysed" is intended to refer to the percentage of hydrolysed proteins by weight, based on the total weight of proteins in the composition.

As used herein, the expression "95% of hydrolysed proteins" includes 96%, 97%, 98%, 99% and 100% of hydrolysed proteins, by weight.

In some embodiments, the at least partially hydrolysed proteins consist of totally hydrolysed proteins.

In some embodiments, the at least partially hydrolysed proteins have a molecular weight ranging from about 1,000 Da to about 11,000 Da.

As used herein, ranging from about 1,000 Da to about 11,000 Da includes 1,250 Da, 1,500 Da, 1,750 Da, 2,000 Da, 2,250 Da, 2,500 Da, 2,750 Da, 3,000 Da, 3,250 Da, 3,500 Da, 3,750 Da, 4,000 Da, 4,250 Da, 4,500 Da, 4,750 Da, 5,000 Da, 5,250 Da, 5,500 Da, 5,750 Da, 6,000 Da, 6,250 Da, 6,500 Da, 6,750 Da, 7,000 Da, 7,250 Da, 7,500 Da, 7,750 Da, 8,000 Da, 8,250 Da, 8,500 Da, 8,750 Da, 9,000 Da, 9,250 Da, 9,500 Da, 9,750 Da, 10,000 Da, 10,250 Da, 10,500 Da, 10,750 Da.

In some embodiments, the at least partially hydrolysed proteins have a molecular weight ranging from about 2,000 Da to about 5,000 Da.

In some embodiments, the at least partially hydrolysed proteins may be from animal origin, in particular from beef, chicken, turkey, lamb, fish, blood plasma, bone marrow.

In some embodiments, the at least partially hydrolysed proteins are from vegetal origin, in particular from wheat, soy, rice, corn, pea.

In some embodiments, the at least partially hydrolysed proteins are from vegetal origin, in particular from soy and/or from rice.

As used herein, the dietary fiber represents the indigestible part of plant foods. The most common dietary fibers are lignin, cellulose, hemicellulose, pectin, gums, and resistant starches (also referred to as beta-glucans).

Illustratively, a source of dietary fiber suitable for implementing a composition according to the instant invention includes rice hulls, corn and corn by-products, soybean hulls, beet pulp, dried potato product, cellulose, bran, peanut hulls, pectin and a mixture thereof.

As used herein, dietary fibers, also referred as to total dietary fibers, include soluble fibers (also referred as fermentable fibers) and insoluble fibers (also referred as non-fermentable fibers). Soluble fibers can be defined as being resistant to digestion and absorption in the small intestine and undergo complete or partial fermentation in the large intestine. Insoluble fibers can be defined as non-starch polysaccharides that are resistant to digestion and absorption in the small intestine, and resistant to fermentation in the large intestine.

In practice, a suitable source of soluble fibers, for the purpose of the instant invention, may be selected from beet pulp, guar gum, chicory pulp, chicory root, psyllium, pectin, blueberry, cranberry, squash, apples, oats, beans, citrus, barley, and peas.

Illustratively, a suitable source of insoluble fibers, for the purpose of the instant invention, may be selected from cellulose, whole wheat products, wheat oat, corn bran, flax seed, grapes, celery, green beans, cauliflower, potato skins, fruit skins, vegetable skins, peanut hulls, and soy fiber.

The total dietary fibers content of the composition according to the instant invention shall be high so as to help reducing the energy density of the diet and promote satiety in pets undergoing a weight loss program, or a weight stabilization program.

In some embodiments, a hypoallergenic palatable composition according to the instant invention comprises an amount ranging from about 10% by weight to about 40% by weight of total dietray fibers, based on the total weight of dry matter of the composition.

As used herein, from about 10% by weight to about 40% by weight of total dietary fibers includes 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39% by weight of total dietary fibers, based on the total weight of dry matter of the composition.

In some embodiments, the amount of total dietary fibers ranges from about 18% by weight to about 38% by weight, based on the total weight of dry matter of the composition.

In some embodiments, the amount of total dietary fibers does not exceed about 35% by weight, in particular does not exceed about 30% by weight, based on the total weight of dry matter of the composition.

In some other embodiments, the amount of total dietary fibers ranges from about 14% by weight to about 26% by weight, based on the total weight of dry matter of the composition.

Within the scope of the instant invention, the expression "crude fiber" is intended to refer to insoluble fibers as generally accepted in the state of the art, and encompass lignin and cellulose.

In some embodiments, a hypoallergenic palatable composition according to the instant invention comprises an amount ranging from about 10% by weight to about 25% by weight of crude fibers, based on the total weight of dry matter of the composition.

As used herein, from about 10% by weight to about 25% by weight of crude fibers includes 11%, 12%, 13%, 14%, 15%, 16%, 17%, 18%, 19%, 20%, 21%, 22%, 23%, 24% by weight.

Based on the dry matter, the composition according to the instant invention may also be characterized by its crude fat content, its ash content, and its nitrogen free extract (NFE), expressed in percentage (%) by weight based on the total weight of dry matter of the composition.

In some embodiments, the composition further comprises, on a dry matter basis, an amount of at most 15% by weight of crude fat, in particular, an amount of at most 10% by weight of crude fat, based on the total weight of dry matter of the composition.

As used herein, the expressions "fat" or "source of fat" are intended to refer to any food-acceptable fat and/or oil. The fat in accordance with the present invention may be indifferently in a fluid form and/or in a solid form. The composition according to the invention may comprise fat from animal origin and/or from vegetal origin. Fat can be supplied by any suitable source known by those skilled in the art.

A suitable plant fat source for the purpose of the instant invention may include, without limitation, wheat, sunflower, safflower, rapeseed, olive, borage, flaxseed, peanuts, blackcurrant seed, cottonseed, wheat, germ, corn germ as well as oils derived from these and other plant fat sources.

A suitable animal fat source for the purpose of the instant invention may include, for example and without limitation, meat; meat by-products such as chicken fat, turkey fat, beef fat, duck fat, pork fat, lamb fat; fish oil, seafood; dairy; eggs. The fat content of food compositions according to the instant invention may be determined by any method known in the art.

In some embodiments, the crude fat content in a composition according to the instant invention ranges from about 5% by weight to about 15% by weight, based on the total weight of dry matter of the composition.

As used herein, from about 5% by weight to about 15% by weight of fat includes 6.0%, 6.5%, 7.0%, 7.5%, 8.0%, 8.5%, 9.0%, 9.5%, 10.0%, 10.5%, 11.0%, 11.5%, 12.0%, 12.5%, 13.0%, 13.5%, 14.0%, 14.5% by weight of fat, based on the total weight of dry matter of the composition.

Illustratively, the crude fat content may comprise a source of linoleic acid, alpha-linoleic acid, arachidonic acid, omega-6 fatty acids, omega-3 fatty acids, eicosapentaenoic acid (EPA), docosahexaenoic acid (DHA) and a mixture thereof.

Within the purpose of the invention, the EPA/DHA content may improve the metabolic status and generate an anti-inflammatory effect. Preferentially, the food composition comprises from about 0.05% to about 0.75% by weight of EPA/DHA, more preferentially from about 0.10% to about 0.50% by weight, based on the total weight of dry matter of the composition.

As used herein, from about 0.05% by weight to about 0.75% by weight of EPA/DHA includes 0.01%, 0.15%, 0.20%, 0.25%, 0.30%, 0.35%, 0.40%, 0.45%, 0.50%, 0.55%, 0.60%, 0.65%, 0.70%, by weight of EPA/DHA, based on the total weight of dry matter of the composition.

Within the scope of the instant invention, the ash is intended to refer to minerals, such as calcium, phosphorus, sodium, chloride, potassium and magnesium.

In some embodiments, the ash content in a composition according to the instant invention is comprised from about 3.5% by weight to about 12.5% by weight, based on the total weight of dry matter of the composition.

As used herein, from about 3.5% by weight to about 12.5% by weight of ash includes 4.0%, 4.5%, 5.0%, 5.5%, 6.0%, 6.5%, 7.0%, 7.5%, 8.0%, 8.5%, 9.0%, 9.5%, 10.0%, 10.5%, 11.0%, 11.5%, 12.0% by weight of ash, based on the total weight of dry matter of the composition.

As used herein, the NFE represents the dry matter that remains after the moisture, proteins, fats, fibers, and ash have been removed from the composition. The NFE represents the carbohydrate content of the composition.

NFE, or carbohydrates, may be supplied under any suitable source(s), as known in the art. A suitable source of NFE may be selected from oat fiber, cellulose, peanut hulls, beet pulp, parboiled rice, corn starch, corn gluten meal, and any combination of those sources. Grains supplying carbohydrate include, but are not limited to, wheat, corn, barley, and rice.

In some embodiments, the NFE content in a composition according to the instant invention ranges from about 20% by weight to about 40% by weight, in particular from about 25% by weight to about 35% by weight, based on the total weight of dry matter of the composition.

As used herein, from about 20% by weight to about 40% by weight NFE includes 21%, 22%, 23%, 24%, 25%, 26%, 27%, 28%, 29%, 30%, 31%, 32%, 33%, 34%, 35%, 36%, 37%, 38%, 39% by weight NFE, based on the total weight of dry matter of the composition.

In some embodiments, the composition further comprises, on a dry matter basis, an amount of at most 30% by weight of starch, in particular, an amount of at most 20% by weight of starch, based on the total weight of dry matter of the composition.

The composition according to the instant invention may further comprise one or more trace element(s), in particular a trace element selected from iron, copper, manganese, zinc, iodine and selenium.

The composition according to the instant invention may further comprise one or more vitamin(s), in particular a vitamin selected from vitamin A, vitamin D, vitamin E, ascorbic acid, vitamin K, thiamine, riboflavin, pantothenic acid, niacin, pyridoxine, folic acid, biotin, vitamin B12 and choline.

In some embodiments, the food composition according to the present invention may further comprise a source of antioxidants.

As used herein, the expression "antioxidant" is intended to refer to a substance that is capable of reacting with free radicals and neutralizing them. Illustrative examples of such substances include, without limitation, carotenoids, including beta-carotene, lycopene and lutein, selenium, coenzyme Q10 (ubiquinone), tocotrienols, soy isoflavones, S-adenosylmethionine, glutathione, taurine, N-acetylcysteine, vitamin E, vitamin C, lipoic acid and L-carnitine.

In some embodiments, the food composition comprises from about 1 % to about 4% by weight of arginine, based on the total weight of dry matter of the copmposition.

As used herein, from about 1% by weight to about 4% by weight of arginine includes 1.25%, 1.50%, 1.75%, 2.00%, 2.25%, 2.50%, 2.75%, 3.00%, 3.25%, 3.50%, 3.75% by weight of arginine, based on the total weight of dry matter of the composition.

In some embodiments, the composition further comprises at least one flavour, in particular a natural flavour.

In some embodiments, the flavour is of protein origin.

Apart from the dry matter, a food composition according to the instant invention may further comprise moisture.

As used herein, the composition according to the invention may alternatively be characterized by (i) the amount of ingredients by weight based on the total weight of dry matter of the said composition, when the moisture is excluded from the ingredients list, or (ii) the amount of ingredients by weight based on the total weight of the composition, when the moisture is incorporated in the ingredients list.

The table 1 below provides an example of characterization of a composition according to the invention, on the basis of dry matter, also referred to as % dry matter, or on the basis of the total weight of the composition, also referred to as % as fed.

**Table 1:** Characterization of a composition according to the instant invention expressed as % dry matter (left column) or % as fed (right column).

|  | % dry matter | % as fed |
|---|---|---|
| **Moisture (%)** | - | 8.5 |
| **Protein (%)** | 32.8 | 30.0 |
| **Crude Fat (%)** | 10.4 | 9.5 |
| **Crude Fiber (%)** | 19.0 | 17.4 |
| **Ash (%)** | 6.8 | 6.2 |
| **NFE (%)** | 31.0 | 28.4 |
| **Total** | **100%** | **100%** |

The moisture content (% w/w) represents the content of liquid, in particular of aqueous content, more particularly the water content of the composition.

In some embodiments, the moisture content of the composition according to the instant invention is comprised from about 4% to about 12% by weight, based on the total weight of the composition.

As used herein, from about 4% to about 12% by weight of moisture includes 4.5%, 5.0%, 5.5%, 6.0%, 6.5%, 7.0%, 7.5%, 8.0%, 8.5%, 9.0%, 9.5%, 10.0%, 10.5%, 11.0%, 11.5% by weight of moisture, based on the total weight of the composition.

In some embodiments, the food composition according to the instant invention may also be characterized by its Metabolizable Energy (ME) parameter.

As used herein, the ME parameter is intended to represent the energy value of a food composition that is directly metabolized after consumption.

Within the scope of the instant invention, the ME value may be measured by any suitable method known in the art.

Illustratively, the ME value may be measured using feeding trial. In practice, the gross energy (GE) of the food is determined in the laboratory, and the amounts of food eaten by the animals are recorded. The faeces and urine from the animals are collected, and the energy in each is determined and called faecal energy (FE) and urinary energy (UE), respectively. The ME is then calculated as:

$$\mathbf{ME \ (kcal/kg) = [GE - (FE + UE)] / Kg \ of \ food \ consumed.}$$

Alternatively, the ME value may be measured by a mathematical method, in particular taking into account the percentage of crude fat (CF), of crude protein (CP), and NFE (carbohydrates) in the composition. In practice each percentage is multiplied by its respective Atwater Factors. The resulting sum is then multiplied by 10. The mathematical method may be represented by the following formula:

$$\mathbf{ME \ (kcal/kg) = 10 \ x \ [(3.5 \ x \ CP) + (8.5 \ x \ CF) + (3.5 \ x \ NFE)].}$$

To date, the most commonly used equation is the modified Atwater factorial equation proposed by the National Research Council (NRC) in 1974, in 1985 and in 2006.

In some embodiments, the Metabolizable Energy (ME) does not exceed 3,200 kcal/kg, as measured according to the NRC 2006.

In some embodiments, the pet animal is a cat or a dog.

As mentioned above, the food composition according to the instant invention may be of use for a weight management including weight loss.

Weight issue in a pet animal may be evaluated by any suitable method known in the art.

Illustratively, the 9-point scale of the body condition score (BCS) may be used.

A BCS of from 6 to 9 would be indicative of an overweight pet animal, in particular, a score of 8 or 9 would be indicative of an obese pet animal.

A BCS of 6 is indicative of a pet animal which weight is up to 15% over its reference ideal weight; a BCS of 7 is indicative of a pet animal which weight is from 15% to 30% over its reference ideal weight; a BCS of 8 is indicative of a pet animal which weight is from 30% to 45% over its reference ideal weight; a BCS of 9 is indicative of a pet animal which weight is above 45% over its reference ideal weight.

Within the scope of the instant invention, a reference ideal weight for a pet animal may be obtained by measuring the BCS. A BCS of 4 or 5 is indicative of a pet animal having an ideal weight.

In some embodiments, the pet animal is overweight.

In practice, the pet animal has a BCS of at least 6, on a 1 to 9 scale.

As used herein, a BCS of at least 6 includes a BCS of 6, 7, 8 or 9.

The invention also relates to the use of a hypoallergenic palatable composition comprising:

- an amount of at least 25% by weight of at least partially hydrolysed proteins; and
- an amount of at least 10% by weight of crude fibers,

based on the total weight of dry matter of the composition, for use in achieving weight management for a pet animal affected with adverse food reaction.

In another aspect, the instant invention further relates to a hypoallergenic palatable composition comprising, by weight based on the total weight of the said composition:

- an amount ranging from about 20% by weight to about 38% by weight of at least partially hydrolysed proteins;
- an amount ranging from about 8% to about 23% of crude fibers;

- an amount ranging from about 4% to about 13% of crude fat; and
- an amount ranging from about 4% to about 12% of moisture.

Within the scope of the instant invention, an amount comprised from about 20% by weight to about 38% by weight of at least partially hydrolysed proteins includes 21%, 22%, 23%, 24%, 25%, 26%, 27%, 28%, 29%, 30%, 31%, 32%, 33%, 34%, 35%, 36%, 37%, by weight of least partially hydrolysed proteins, based on the total weight of the said composition.

An amount comprised from about 8% by weight to about 23% by weight of crude fibers includes 9%, 10%, 11%, 12%, 13%, 14%, 15%, 16%, 17%, 18%, 19%, 20%, 21%, 22% by weight of crude fibers, based on the total weight of the said composition.

An amount comprised from about 4% by weight to about 13% by weight of crude fat includes 5%, 6%, 7%, 8%, 9%, 10%, 11 %, 12% by weight of crude fat, based on the total weight of the said composition.

An amount comprised from about 4% by weight to about 12% by weight of moisture includes 5%, 6%, 7%, 8%, 9%, 10%, 11% by weight of moisture, based on the total weight of the said composition.

In some embodiments, the hypoallergenic palatable composition further comprises an amount of ash comprised from about 3.0% by weight to about 12.0% by weight, based on the total weight of the said composition.

As used herein, from about 3.0% by weight to about 12.0% by weight includes 3.5%, 4.0%, 4.5%, 5.0%, 5.5%, 6.0%, 6.5%, 7.0%, 7.5%, 8.0%, 8.5%, 9.0%, 9.5%, 10.0%, 10.5%, 11.0%, 11.5% by weight, based on the total weight of the said composition.

In some embodiments, the hypoallergenic palatable composition further comprises an amount of NFE comprised from about 18% by weight to about 38% by weight, in particular from about 25% by weight to about 35% by weight, based on the total weight of the said composition.

As used herein, from about 18% by weight to about 38% by weight of NFE includes 19%, 20%, 21%, 22%, 23%, 24%, 25%, 26%, 27%, 28%, 29%, 30%, 31%, 32%, 33%, 34%, 35%, 36%, 37% by weight of NFE, based on the total weight of the said composition.

The hypoallergenic palatable compositions according to the instant invention may be in any suitable form, as disclosed in the state of the art.

In some embodiments, the hypoallergenic palatable composition is in the form of a kibble, a snack, a treat or a biscuit.

The food composition according to the instant invention may be manufactured following the common principles and methods from the state of the art, although adaptations of these principles and methods may be performed when required.

In practice, a food composition may be prepared by mixing together ingredients and kneading in order to make a consistent dough, which may be subsequently cooked. The process of manufacturing a pet food composition is usually done by baking and/or extruding. The dough is typically fed into an expander and/or extruder, which use pressurized steam or hot water to cook the ingredients. While inside the extruder, the dough is under extreme pressure and high temperatures. The dough is then pushed through a die (specifically sized and shaped hole) and then cut off using a knife. The puffed dough pieces are made into kibble by passing it through a dryer so that moisture is dropped down to a defined target ensuring stability of the food until consumption. The kibble can then be sprayed with fats, oils, minerals, vitamins, the natural extracts cocktail and optionally sealed into packages.

It is needless to mention that the combined ingredients of the pet food composition according to the invention provide all the recommended nutrients, vitamins and minerals for the pet, i.e. a complete and balanced food.

In some embodiments, the food composition according to the instant invention may comply with the recommendations provided by the National Research Council, in 2006 (Nutritional Requirements for dogs, National Academy Press, Washington DC) or by the Association of America Feed Control Officials (Official Publication 1996).

• _Methods_

Another aspect of the instant invention further relates to a method for achieving weight management in a pet animal affected with adverse food reaction characterized in that it comprises at least a step of feeding the pet animal with a hypoallergenic palatable composition as defined in the instant invention.

In some embodiments, the step of feeding the pet animal with a hypoallergenic palatable composition may be performed once, twice or three times per day; every other day; once, twice, three times, four times, five times per week.

In some embodiments, the step of feeding the pet animal with a hypoallergenic palatable composition may be performed for a period of a one, two, three, four, five, six, seven, eight, ten weeks, one, two, three, four, five, six, seven, eight, ten months, or more.

The dosage regimen of the hypoallergenic palatable composition as defined in the present disclosure may depend from the age, the sex, the breed, the general condition of the pet animal.

The present disclosure is further illustrated by, but not limited to, the examples below.

## EXAMPLES

EXAMPLE 1

1/ Material and methods

The protocol was approved by the Royal Canin® Ethical Committee. The study was carried out in 4 French veterinary clinics. Client-owned adult dogs with a Body Condition Score (BCS) ≥ 5 (on a 9-point scale) with confirmed or a strong suspicion of CAFR based upon history and clinical features were included. Dogs were previously fed with dedicated food to manage food allergy (hydrolyzed protein-based diets with moderate protein contents) for longer than one month and had a stabilized skin condition: with a CADESI-04 (Canine Atopic Dermatitis Extent and Severity Index, as described in (Olivry et al., 2014)) ≤ 10, and a pruritus score (5-point scale, from 0 = normal to 5 = extreme) ≤ 1. All dogs were correctly treated against external and internal parasites prior to the inclusion and for the duration of the study.

For 15 days, after a 3-day dietary transition, dogs were fed exclusively the test diet (Hydrolyzed soy protein-based; Crude protein 30%, Crude fat 9.5%, Total Dietary fibers 28.1%, Metabolizable Energy 2556 kcal/kg as fed, calculated with NRC 2006 predictive equation) at maintenance energy requirements (80-95 $kcal/kg^{0.75}$).

Body weight (BW), CADESI and pruritus score were recorded at baseline (V0) and after 15 days (V15) by the investigators. Palatability and digestive tolerance of the diets were also evaluated by the owners at V0 and V15. Statistical analysis was performed using a Statistical Software (SAS Institute). CADESI and pruritus scores at V15 were compared with initial score (V0) using Wilcoxon signed-rank test. The level of statistical significance was set at $p < 0.05$. Results are expressed as mean ± SD.

2/ Results

Sixteen adult dogs (11 males and 5 females; Age: 6.5±2.4 years old) were enrolled and completed the trial.

The trial population characteristics are presented in Table 2 below.

**Table 2:** population characteristics

|  | **Hypo Satiety** |
|---|---|
| **Number of dogs** | 16 |
| **Sex ratio** | 11 males / 5 females |
| **Mean weight (kg)** **[Min-Max]** | 22.6 [3.1-75] |
| **BCS** **Median** **[Min-Max]** | 6 [5-7] |
| **Age** **Median/Average (years)** **[Min-Max]** | 6 [1-10] |
| **Current diet** | 11 hypoallergenic 2 hypoallergenic moderate calorie 3 hypoallergenic small dog |

Before enrolment, all dogs were fed hydrolyzed soy protein-based commercial diets, with moderate protein contents, designed for the management of CAFR.

The evolution of the monitored parameters is indicated in Table 3 below.

**Table 3:** Parameters evolution

|  | **V0** | **V15** | **p value** |
|---|---|---|---|
| **Weight (kg)** | 22.6± 20.5 | 23.1±20.2 | 0.4 |

(continued)

|  | V0 | V15 | p value |
|---|---|---|---|
| **BCS** | 6±0.7 | 6±0.7 | 0.58 |
| **Prurit score (average) [Min-Max]** | 0.5±0.5 [0-1] | 0.25±0.9 [0-1] | 0.13 |
| **CADESI-4 (average) [Min-Max]** | 2.25±1.7 [1-6] | 1.56±0.9 [0-3] | 0.08 |
| **Begging score [Min-Max]** | 0.37 [0-1] | 0.56 [0-1] | 0.15 |
| **Quality of life** | 9.187 | 9.625 | 0.02 |

Body weight and BCS were maintained over the duration of the study. No treatment had to be administered over the duration of the trial, and no skin flare was recorded. CADESI and pruritus scores did not differ significantly between baseline and two weeks after feeding the test diet. Acceptance of the new diet was satisfactory, with 15/16 owners (94%) rating palatability as good. 14/15 (94%) owners scored the consistency of the stools as normal with the new diets (versus 14/16 at baseline).

Altogether, these data highlighted that this novel diet with high levels of hydrolyzed soy protein and high levels of dietary fibre was well tolerated in dogs with CAFR. Dogs switching to the test diet remained stable, skin condition was maintained, with no pruritus flare observed. Palatability and digestive tolerance were high, which are essential for optimal pet-owner compliance in the multimodal management of both overweight and CAFR.

EXAMPLE 2

Palatable hypoallergenic compositions according to the invention are shown in Tables 4 and 5 below.

**Table 4:** food composition according to the invention for dogs

|  | Dog food composition[3] (% as fed) | % dry matter |
|---|---|---|
| **Moisture (%)** | 8.5 | - |
| **Protein (%)** | 30.0 | 32.8 |
| **Crude Fat (%)** | 9.5 | 10.4 |
| **Crude Fiber (%)** | 17.4 | 19.0 |
| **Ash (%)** | 6.2 | 6.8 |
| **NFE[1] (%)** | 28.4 | 31.0 |
| **ME (NRC 2006) (kcal/kg)[2]** | 2,556 | |

[1]NFE stands for "nitrogen free extract". [2]ME (NRC 2006) represents the ME determined by the modified Atwater factorial equation as proposed by the National Research Council (NRC) in 2006. [3]Composition: hydrolyzed soy protein, brewers rice, powdered cellulose, natural flavors (including poultry and cow milk), chicken fat, pea fiber, dried plain beet pulp, fish oil, calcium carbonate, potassium chloride, monocalcium phosphate, vegetable oil, psyllium seed husk, fructooligosaccharides, sodium tripolyphosphate, choline chloride, DL-methionine, vitamins [DL-alpha tocopherol acetate (source of vitamin E), niacin supplement, L-ascorbyl-2-polyphosphate (source of vitamin C), D-calcium pantothenate, biotin, pyridoxine hydrochloride (vitamin B6), riboflavin supplement, thiamine mononitrate (vitamin B1), vitamin A acetate, vitamin B12 supplement, folic acid], taurine, marigold extract (Tagetes erecta L.), magnesium oxide, N-butyric acid, trace minerals [zinc proteinate, zinc oxide, manganese proteinate, manganous oxide, copper sulfate, ferrous sulfate, sodium selenite, copper proteinate, calcium iodate], GLA safflower oil, L-carnitine, rosemary extract, preserved with mixed tocopherols and citric acid.

**Table 5:** food composition according to the invention for cats

|  | Feline food composition[3] (% as fed) | % dry matter |
|---|---|---|
| Moisture (%) | 5.5 | - |
| Protein (%) | 34.0 | 36.1 |
| Crude Fat (%) | 9.0 | 9.5 |
| Crude Fiber (%) | 14.5 | 15.3 |
| Ash (%) | 7.5 | 7.9 |
| NFE[1] (%) | 29.5 | 31.2 |
| ME (NRC 2006)[2] (kcal/kg) | 3,155 |  |

[1]NFE stands for "nitrogen free extract". [2]ME (NRC 2006) represents the ME determined by the modified Atwater factorial equation as proposed by the National Research Council (NRC) in 2006. [3]Composition: hydrolyzed soy protein, brewers rice, powdered cellulose, chicken fat, natural flavors (including poultry), dried chicory root, calcium sulfate, potassium chloride, psyllium seed husk, fish oil, calcium carbonate, sodium pyrophosphate, monocalcium phosphate, choline chloride, taurine, vitamins [DL-alpha tocopherol acetate (source of vitamin E), niacin supplement, L-ascorbyl-2-polyphosphate (source of vitamin C), D-calcium pantothenate, biotin, pyridoxine hydrochloride (vitamin B6), riboflavin supplement, thiamine mononitrate (vitamin B1), vitamin A acetate, vitamin B12 supplement, folic acid], DL-methionine, salt, marigold extract (Tagetes erecta L.), trace minerals [zinc proteinate, zinc oxide, manganese proteinate, manganous oxide, copper sulfate, ferrous sulfate, sodium selenite, copper proteinate, calcium iodate], magnesium oxide, L-carnitine, rosemary extract, preserved with mixed tocopherols and citric acid.

EXAMPLE 3

Comparison of the hypoallergenic compositions on the market (Hill's z/d and Purina HA) and a composition according to the invention.

**Table 6:** Canine compositions

|  | Hill's z/d® | Purina HA® | Inventive composition |
|---|---|---|---|
| Proteins | 19.2% (53 g/Mcal) | 19.8% (53 g/Mcal) | 30% (111 g/Mcal) |
| Fat | 14.7% (41g/Mcal) | 9.8% (26 g/Mcal) | 9.5% (35 g/Mcal) |
| Crude fibers | 4.6% (13g/Mcal) | 1.5% (4 g/Mcal) | 17.4% (64 g/Mcal) |
| ME (NRC 2006)[1] | 3,620 kcal/kg | 3,723 kcal/kg | 2,709 kcal/kg |

[1]ME: metabolizable energy content, as determined by the modified Atwater factorial equation as proposed by the National Research Council (NRC) in 2006.

**Table 7:** Feline compositions

|  | Hill's z/d® | Purina HA® | Inventive composition |
|---|---|---|---|
| Proteins | 32.4% (88 g/Mcal) | 31.2% (77 g/Mcal) | 34% (109 g/Mcal) |
| Fat | 14.9% (40 g/Mcal) | 11.2% (28 g/Mcal) | 9.0% (29 g/Mcal) |
| Crude fibers | 3.1% (8 g/Mcal) | 1.8% (4 g/Mcal) | 14.5% (47 g/Mcal) |
| ME (NRC 2006)[1] | 3,680 kcal/kg | 4,032 kcal/kg | 3,108 kcal/kg |

ME: metabolizable energy content, as determined by the modified Atwater factorial equation as proposed by the National Research Council (NRC) in 2006.

## REFERENCES

- Association for Pet Obesity Prevention (APOP) survey 2016. www.petobesityprevention.com
- Courcier EA, Thomson RM, Mellor DJ, Yam PS. An epidemiological study of environmental factors associated with canine obesity. J Small Anim Pract. 2010 Jul;51(7):362-7.
- German AJ, Holden SL, Bissot T, Morris PJ, Biourge V. A high protein high fibre diet improves weight loss in obese dogs. Vet J. 2010 Mar;183(3):294-7.
- German AJ. Weight management in obese pets: the tailoring concept and how it can improve results. Acta Vet Scand. 2016, 58(Suppl 1):57.
- Hand MS, Thatcher CD, Remillard RL, Roudebush P, Novotny BJ. Small animal clinical nutrition, 5th Edition, 2010.
- Hefle SL, Nordlee JA, Taylor SL. Allergenic foods. Crit Rev Food Sci Nutr. 1996;36 Suppl:S69-89.
- Olivry T, Saridomichelakis M, Nuttall T, Bensignor E, Griffin CE, Hill PB; International Committee on Allergic Diseases of Animals (ICADA). Validation of the Canine Atopic Dermatitis Extent and Severity Index (CADESI)-4, a simplified severity scale for assessing skin lesions of atopic dermatitis in dogs. Vet Dermatol. 2014 Apr;25(2):77-85.
- Olivry T, Mueller RS. Critically appraised topic on adverse food reactions of companion animals (5): discrepancies between ingredients and labeling in commercial pet foods. BMC Vet Res. 2018 Jan 22;14(1):24.
- Verlinden A, Hesta M, Millet S, Janssens GP. Food allergy in dogs and cats: a review. Crit Rev Food Sci Nutr. 2006;46(3):259-73.
- Weber M, Bissot T, Servet E, Sergheraert R, Biourge V, German AJ. A high-protein, high-fiber diet designed for weight loss improves satiety in dogs. J Vet Intern Med. 2007 Nov-Dec;21(6): 1203-8.

## Claims

1. A hypoallergenic palatable composition for use in achieving weight management for a pet animal affected with adverse food reaction **characterized in that** it comprises:

   - an amount of at least 25% by weight of at least partially hydrolysed proteins; and
   - an amount of at least 10% by weight of crude fibers, based on the total weight of dry matter of the composition.

2. The composition for use according to claim 1, **characterized in that** the at least partially hydrolysed proteins consist of 95% of hydrolysed proteins, by weight, based on the total weight of proteins in the composition.

3. The composition for use according to claim 1 or 2, **characterized in that** the at least partially hydrolysed proteins consist of totally hydrolysed proteins.

4. The composition for use according to claim 3, **characterized in that** the at least partially hydrolysed proteins have a molecular weight ranging from about 1,000 Da to about 11,000 Da.

5. The composition for use according to any of the preceding claims, **characterized in that** the at least partially hydrolysed proteins are from vegetal origin, in particular from corn, wheat, pea, soy and/or from rice and more preferentially from soy and/or rice.

6. The composition for use according to any of the preceding claims, **characterized in that** it further comprises, on a dry matter basis, an amount of at most 15% by weight of fat, in particular, an amount of at most 10% by weight of fat, based on the total weight of dry matter of the composition.

7. The composition for use according to any of the preceding claims, **characterized in that** it comprises, on a dry matter basis, an amount of at most 30% by weight of starch, in particular, an amount of at most 22% by weight of starch, based on the total weight of dry matter of the composition.

8. The composition for use according to any of the preceding claims, **characterized in that** it further comprises at least one flavour, in particular a natural flavour.

9. The composition for use according to claim 8, **characterized in that** the flavour is of protein origin.

10. The composition for use according to any of the preceding claims, **characterized in that** the Metabolizable Energy (ME) does not exceed 3,200 kcal/kg, as measured according to the NRC 2006.

11. The composition for use according to any of the preceding claims, **characterized in that** the pet animal is a cat or a dog.

12. The composition for use according to any of the preceding claims, **characterized in that** the pet animal is overweight.

13. A hypoallergenic palatable composition comprising, by weight based on the total weight of the said composition:

    - an amount ranging from about 20% by weight to about 38% by weight of at least partially hydrolysed proteins;
    - an amount ranging from about 8% by weight to about 23% by weight of crude fibers;
    - an amount ranging from about 4% to about 13% of crude fat;
    - an amount ranging from about 4% to about 12% of moisture.

14. A method for achieving weight management in a pet animal affected with adverse food reaction **characterized in that** it comprises at least a step of feeding the pet animal with a hypoallergenic palatable composition as defined in any one of claims 1 to 10 and claim 13.

EP 3 639 674 A1

Europäisches
Patentamt

European
Patent Office

Office européen
des brevets

EUROPEAN SEARCH REPORT

Application Number

EP 18 20 1322

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WEBER MICKAËL ET AL: "A high-protein, high-fiber diet designed for weight loss improves satiety in dogs", JOURNAL OF VETERINARY INTERNAL MEDICINE, WILEY-BLACKWELL PUBLISHING, INC, US, vol. 21, no. 6, 1 November 2007 (2007-11-01), pages 1203-1208, XP002777508, ISSN: 0891-6640 * pages 1204 -1207 (especially Table 1) * ----- | 1-14 | INV. A23K10/00 A23K20/147 A23K50/40 |
| X,D | GERMAN A J ET AL: "A high protein high fibre diet improves weight loss in obese dogs", VETERINARY JOURNAL, BAILLIERE TINDALL, LONDON, GB, vol. 183, no. 3, 1 March 2010 (2010-03-01) , pages 294-297, XP026892201, ISSN: 1090-0233, DOI: 10.1016/J.TVJL.2008.12.004 [retrieved on 2009-01-12] * page 295 * ----- | 1-14 | |
| X | WO 01/84950 A1 (IAMS COMPANY [US]) 15 November 2001 (2001-11-15) * page 1, lines 5-8; page 2, lines 16-25; Tables 1 and 2; claims 1-9 * ----- | 1-14 | TECHNICAL FIELDS SEARCHED (IPC) A23K |
| X | US 4 738 864 A (ERNSTER MICHAEL F [US]) 19 April 1988 (1988-04-19) * column 2, lines 17-29; claims 1-16 * ----- | 1-14 | |

The present search report has been drawn up for all claims

| Place of search | Date of completion of the search | Examiner |
|---|---|---|
| Munich | 18 January 2019 | Georgopoulos, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 20 1322

This annex lists the patent family members relating to the patent documents cited in the above-mentioned European search report.
The members are as contained in the European Patent Office EDP file on
The European Patent Office is in no way liable for these particulars which are merely given for the purpose of information.

18-01-2019

| Patent document cited in search report | | Publication date | Patent family member(s) | | Publication date |
|---|---|---|---|---|---|
| WO 0184950 | A1 | 15-11-2001 | AT | 336177 T | 15-09-2006 |
| | | | AU | 5542001 A | 20-11-2001 |
| | | | BR | 0110715 A | 18-03-2003 |
| | | | CA | 2408030 A1 | 15-11-2001 |
| | | | DE | 60122315 T2 | 23-08-2007 |
| | | | EP | 1282364 A1 | 12-02-2003 |
| | | | JP | 4889904 B2 | 07-03-2012 |
| | | | JP | 2003532394 A | 05-11-2003 |
| | | | MX | PA02011047 A | 19-08-2004 |
| | | | US | 2003072786 A1 | 17-04-2003 |
| | | | WO | 0184950 A1 | 15-11-2001 |
| US 4738864 | A | 19-04-1988 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HAND et al.** Small animal clinical nutrition
- *National Research Council (NRC),* 1974
- National Research Council. Nutritional Requirements for dogs, National Academy Press, 2006
- **OLIVRY et al.** *Canine Atopic Dermatitis Extent and Severity Index,* 2014
- *National Research Council (NRC),* 2006
- **COURCIER EA ; THOMSON RM ; MELLOR DJ ; YAM PS.** An epidemiological study of environmental factors associated with canine obesity. *J Small Anim Pract,* July 2010, vol. 51 (7), 362-7
- **GERMAN AJ ; HOLDEN SL ; BISSOT T ; MORRIS PJ ; BIOURGE V.** A high protein high fibre diet improves weight loss in obese dogs. *Vet J.,* March 2010, vol. 183 (3), 294-7
- **GERMAN AJ.** Weight management in obese pets: the tailoring concept and how it can improve results. *Acta Vet Scand,* 2016, vol. 58 (1), 57
- **HAND MS ; THATCHER CD ; REMILLARD RL ; ROUDEBUSH P ; NOVOTNY BJ.** Small animal clinical nutrition. 2010
- **HEFLE SL ; NORDLEE JA ; TAYLOR SL.** Allergenic foods. *Crit Rev Food Sci Nutr.,* 1996, vol. 36, S69-89
- **OLIVRY T ; SARIDOMICHELAKIS M ; NUTTALL T ; BENSIGNOR E ; GRIFFIN CE ; HILL PB.** International Committee on Allergic Diseases of Animals (ICADA). Validation of the Canine Atopic Dermatitis Extent and Severity Index (CADESI)-4, a simplified severity scale for assessing skin lesions of atopic dermatitis in dogs. *Vet Dermatol,* April 2014, vol. 25 (2), 77-85
- **OLIVRY T ; MUELLER RS.** Critically appraised topic on adverse food reactions of companion animals (5): discrepancies between ingredients and labeling in commercial pet foods. *BMC Vet Res.,* 22 January 2018, vol. 14 (1), 24
- **VERLINDEN A ; HESTA M ; MILLET S ; JANSSENS GP.** Food allergy in dogs and cats: a review. *Crit Rev Food Sci Nutr.,* 2006, vol. 46 (3), 259-73
- **WEBER M ; BISSOT T ; SERVET E ; SERGHERAERT R ; BIOURGE V ; GERMAN AJ.** A high-protein, high-fiber diet designed for weight loss improves satiety in dogs. *J Vet Intern Med.,* November 2007, vol. 21 (6), 1203-8